# EUROPÄISCHE PATENTSCHRIFT

(11) **EP 0 752 821 B1**
(45) Veröffentlichungstag und Bekanntmachung des Hinweises auf die Patenterteilung: **12.04.2000**
(21) Anmeldenummer: 96903873.6
(22) Anmeldetag: 16.02.1996
(51) Int. Cl.: A44B 11/25, B64D 17/32

(54) **BETÄTIGUNGSEINRICHTUNG MIT EINEM DREHBAREN TOPFFÖRMIGEN VERSCHLUSSKOPF FÜR MEHRPUNKT-SICHERHEITSGURTE**
ACTUATING DEVICE WITH A ROTATABLE POT-SHAPED CLOSURE HEAD FOR MULTI-POINT SAFETY BELTS
DISPOSITIF D'ACTIONNEMENT POURVU D'UNE TETE DE VERROUILLAGE ROTATIVE EN FORME DE POT POUR CEINTURE DE SECURITE MULTIPOINT

(30) Priorität: 17.02.1995 DE 19505429
(43) Veröffentlichungstag der Anmeldung: 15.01.1997
(73) Patentinhaber: Schroth, Carl-Jürgen, 59494 Soest (DE)
(72) Erfinder: Schroth, Carl-Jürgen, 59494 Soest (DE)
(74) Vertreter: Bockermann, Rolf, Dipl.-Ing.
(86) Internationale Anmeldenummer: DE9600246
(87) Internationale Veröffentlichungsnummer: WO9625062

(56) Entgegenhaltungen:
- EP-A- 0 161 664
- DE-B- 1 090 972
- DE-B- 1 137 633
- GB-A- 2 183 714

## Beschreibung

Die Erfindung betrifft eine Betätigungseinrichtung für den Verschluss eines Mehrpunkt-Sicherheitsgurts, insbesondere für einen Sitz in einem Rennwagen oder in einem Flugzeug.

Nach einer bekannten Bauart, die in die zuständigen Sicherheitsstandards eingegangen ist, werden Betätigungseinrichtungen für Mehrpunkt-Sicherheitsgurte, insbesondere für Rennwagen, als Hebel ausgeführt. Diese Hebel ragen sowohl über die Planebene der Grundkörper nach oben als auch über deren Durchmesser hinaus, und zwar sowohl der guten Erreichbarkeit wegen als auch, um die aufzubringende Kraft gering zu halten, damit ein Verschluss selbst nach einem Unfall noch zu betätigen ist.

Im Flugzeugbau werden Betätigungseinrichtungen für Mehrpunkt-Sicherheitsgurte entweder mit stark eingekerbten oder mit topfförmigen, indessen sehr glatten Verschlussköpfen ausgerüstet.

Die erste Ausführungsform solcher Betätigungseinrichtungen soll einen ausreichenden Kraftschluss zwischen der Hand des Benutzers und der Betätigungseinrichtung herstellen. Sie hat aber den Nachteil, dass z.B. Flugzeugführer beim Check vor dem Abflug unbeabsichtigt mit einem Checklistenhalter in eine der Kerben einhaken und dabei den Verschluss ungewollt öffnen können, da die Winkelbewegung bei solchen Verschlüssen mit ca. 30° bis 40° verhältnismäßig klein gehalten ist.

Um diese Nachteile zu vermeiden, hat man im Umfang der zweiten Ausführungsform glatte topfförmige Ausführungen verwendet. Diese haben aber nun wiederum den Nachteil, dass ein Benutzer beim Lösen des Sicherheitsgurts, also bei der Betätigung des Verschlusses, diesen in der muldenartig gekrümmten Hand verklammern muss, um einen ausreichenden Kraftschluss zur Betätigung herzustellen. Es ist jedoch bekannt, dass eine z.B. auf dem Handrücken verletzte Hand kaum mehr zu einer solchen Klammerfunktion fähig ist. Weiterhin ist der Einsatz einer solchen Betätigungseinrichtung an einem Sicherheitsgurt, der in einem Ambulanzfluggerät eingesetzt wird, mit erheblichen Sicherheitsrisiken behaftet, da seine Betätigung mit z.B. durch Medikamente oder gar Blut verschmierter Hand eines Rettungssanitäters aufgrund des dann besonders geringen Reibungskoeffizienten kaum mehr möglich ist.

Die GB 2 183 714 A zeigt eine Betätigungseinrichtung mit einem drehbaren Verschlusskopf für Mehrpunkt-Sicherheitsgurte für Rennwagen oder Flugzeuge. Sie offenbart keinen topfförmigen Verschlusskopf. Es handelt sich vielmehr um einen scheibenförmigen Verschlusskopf mit durch sternförmige Stege voneinander getrennten, umfangsseitig geschlossenen segmentartigen stirnseitigen Vertiefungen in der Stirnseite des Verschlusskopfs und einer aufgerauhten, leicht konischen umfangsseitigen Oberfläche. Am Umfang des Verschlusskopfs befinden sich daher keine Fingermulden. Bezüglich der großen segmentartigen Vertiefungen, welche durch die Stege getrennt sind, muss festgestellt werden, dass der Verschlusskopf nur mit der gesamten Handinnenfläche unter Auflage auf der kompletten Stirnseite des Verschlusskopfs verdreht werden kann. Da die segmentartigen Vertiefungen ausschließlich in der Stirnseite liegen, sind auch keine zum Umfang hin offenen Aussparungen vorgesehen. Dadurch sind auch keine zum Umfang hin verlaufende Flanken von Fingermulden vorhanden und auch keine, die in nur einem unteren Kreisbogenabschnitt liegen.

Was den Vorschlag gemäß der DE-AS 1 090 922 (Verschluss für einen Fallschirmgurt) anlangt, so ist zu erkennen, dass in der Gebrauchslage dieses Gurtverschlusses (Lage vor dem Bauch eines Benutzers) zwei nach unten gerichtete Eingriffe für Finger und Daumen und zwei nach oben gerichtete Eingriffe für Finger und Daumen vorhanden sind, also insgesamt vier Eingriffe. Die unten und oben liegenden Eingriffe sind jeweils durch einen prägnanten Radialsteg voneinander getrennt. Dabei stehen die Radialstege über die konvexe Oberfläche der Vorderplatte erheblich vor. Sie erstrecken sich in der Gebrauchslage in einer vertikalen Ebene.

Durch derart weit über die konvexe Oberfläche der Vorderplatte vorstehende Radialstege werden Hindernisse gebildet, durch die sowohl im Cockpit eines Rennwagens als auch im Cockpit eines Flugzeugs aufgrund der dort herrschenden engen Verhältnisse äußerst gefährliche Situationen entstehen können. Mithin existieren erhebliche Gefahrenmomente für einen Rennfahrer oder einen Flugzeugführer. Es besteht permanent die Möglichkeit, dass es zu einem ungewollten Kraftschluss zwischen den Händen eines Rennfahrers oder eines Flugzeugführers einerseits und den Radialstegen des Gurtverschlusses andererseits kommen kann. Darüberhinaus besteht ständig die Gefahr, dass z.B. der Checklistenhalter eines Flugzeugführers mit den Radialstegen in Kontakt gelangen kann mit der Folge, dass auch dann der Gurtverschluss unbeabsichtigt geöffnet wird, dieser Öffnungsvorgang jedoch vom Flugzeugführer nicht wahrgenommen wird.

Die einem Gurtverschluss zugedachte Aufgabe, beispielsweise bei einem Überschlag eines Rennwagens oder bei einer Taumelbewegung eines Flugzeugs die Position des Rennfahrers oder des Flugzeugführers im Sitz des Cockpits einwandfrei zu gewährleisten, kann dieser demzufolge dann nicht mehr erfüllen.

Derselbe Sachverhalt trifft prinzipiell auch für den ebenfalls einen Verschluss für einen Fallschirmgurt offenbarenden Vorschlag der DE-AS 1 137 633 zu, und zwar deshalb, weil bei diesem stirnseitig nur noch vier jeweils um 90° zueinander versetzte schmale Radialstege rippenartig vorstehen, die große stirnseitige Räume begrenzen. Diese gut zugänglichen Radialstege eröffnen somit ständig die Gefahr, dass ein Rennfahrer oder ein Flugzeugführer mit ihnen in Kontakt gelangt oder die Radialstege von einem Checklistenhalter kontaktiert werden können, so dass der Gurtverschluss unbeabsichtigt und unbemerkt geöffnet wird.

Der Erfindung liegt ausgehend vom Stand der Technik die Aufgabe zugrunde, eine Betätigungseinrichtung für den Verschluss eines Mehrpunkt-Sicherheitsgurts zu schaffen, die einfach zu bedienen ist und dennoch allen Situation in einem Cockpit eines Rennwagens oder eines Flugzeugs gerecht wird.

Die Lösung dieser Aufgabe besteht nach der Erfindung in den Merkmalen des Patentanspruchs.

Dazu wird der Verschlusskopf jetzt topfförmig in etwa seinem Durchmesser entsprechend ausgeführt. Ist die Mechanik des Verschlusses schwergängig, kann der Durchmesser des Verschlusskopfs über den äußeren Durchmesser des Grundkörpers hinausragen, um durch den dann größeren Durchmesser auch eine größere Hebellänge zu schaffen. Die Unterkante der Betätigungseinrichtung wird dabei vorteilhaft als Einführschräge für die Gurtzungen ausgebildet.

Nur an dem beim Anliegen des Verschlusses am Körper des Gurtbenutzers nach unten zeigenden Kreisbogenabschnitt des topfförmigen Verschlusskopfs sind lediglich zwei Fingermulden vorgesehen. Zwischen den Fingermulden ist ein Steg ausgebildet, dessen Flanken als Betätigungsflächen dienen. Über den Steg wird die Öffnungskraft eingeleitet. In vorteilhafter Weise ist der Steg radial ausgerichtet.

Der zwischen den Fingermulden liegende Steg ragt nicht über die Oberfläche des Verschlusskopfs hinaus. Die äußerste Kante der Fingermulden ist unter einem Winkel von möglichst nicht größer als 90° von der vertikalen Mittellinie des Verschlusses gemessen positioniert. Hierdurch wird verhindert, dass z.B. bei einem Überschlag eines Rennwagens, beispielsweise eines Rallye-Sportwagens, oder der Taumelbewegung eines Flugzeugs die dann frei umher pendelnden Arme und Hände der Insassen unbeabsichtigt mit dem Verschlusskopf in Kraftschluss kommen und diesen öffnen. Auch kann der Checklistenhalter eines Flugzeugführers sich nicht mehr mit dem Verschlusskopf verhaken und dadurch zu einem unbeabsichtigen Öffnen des Verschlusses führen.

Gleichfalls kann aber auch unter widrigsten Bedingungen immer noch Kraft über die Finger auf eine solchermaßen ausgestaltete Betätigungseinrichtung aufgebracht werden, um den Verschluss zu bedienen.

Durch die bezüglich der Mittellinie versetzte Anordnung der beiden Fingermulden können deren inneren Scheitelpunkte näher zur horizontalen Mittelachse der Betätigungseinrichtung hin verlagert werden. Dadurch können die Flanken des Stegs länger ausgebildet werden, so dass die Krafteinleitung durch nur zwei Finger auf die Flanken ermöglicht wird.

Die Erfindung ist nachfolgend anhand von in den Zeichnungen dargestellten Ausführungsbeispielen näher erläutert.

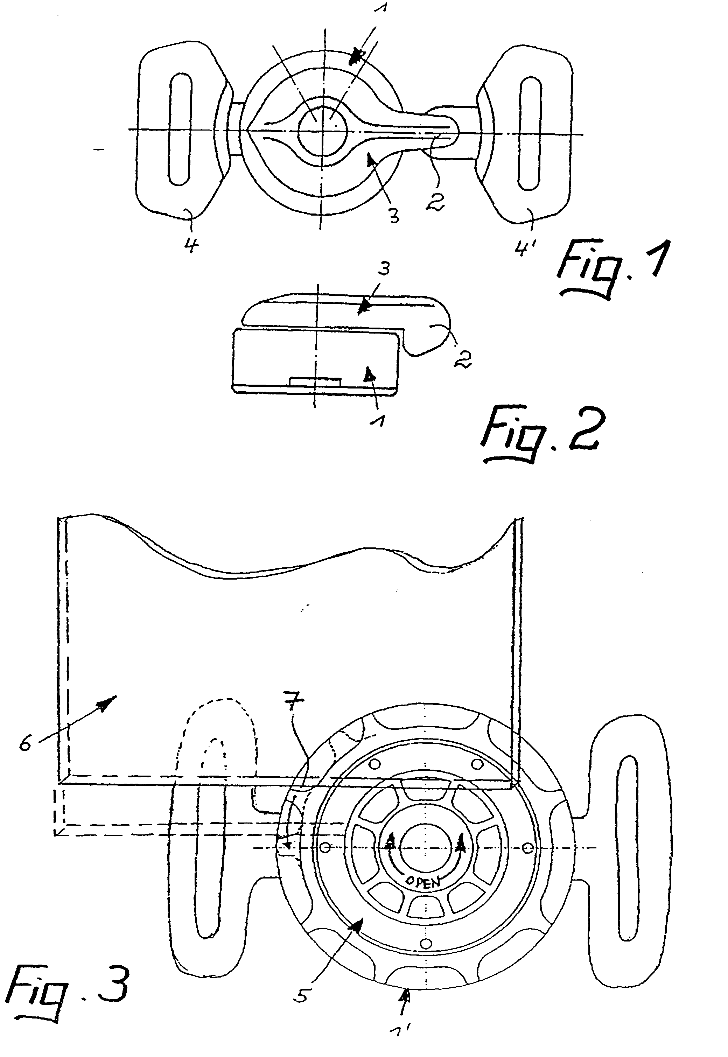

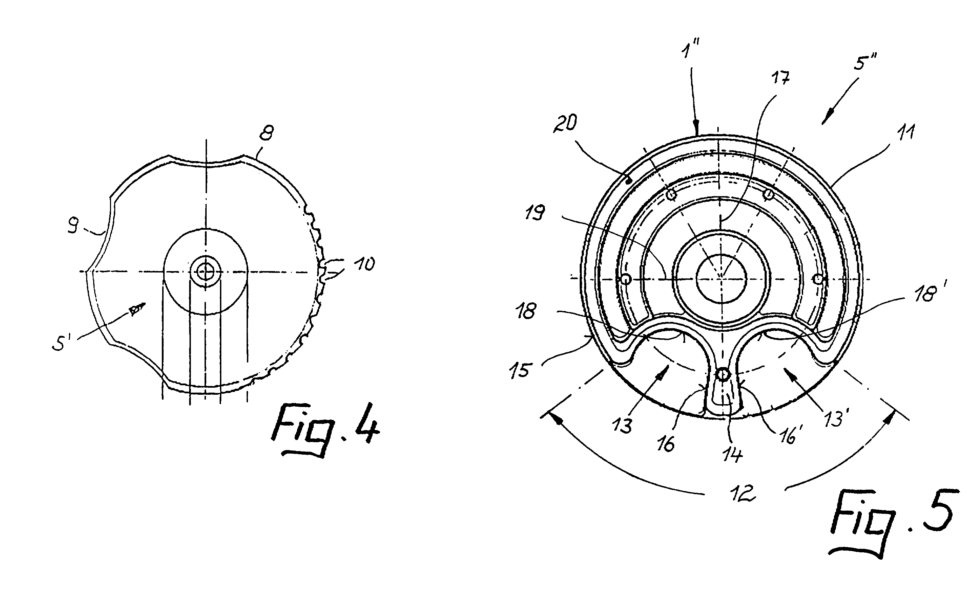

Figuren 1 und 2 zeigen einen Verschluss 1 herkömmlicher Bauart in der Draufsicht und in der Seitenansicht mit einem deutlich überstehenden Ende 2 eines Bedienungshebels 3 und zum Verschluss 1 gehörenden Gurtzungen 4, 4'.

Figur 3 zeigt eine andere bekannte Ausführungsform einer Betätigungseinrichtung 5 mit einem Checklistenhalter 6 eines Flugzeugführers, der sich in Eingriff mit einer bei dieser Betätigungseinrichtung 5 starken Einkerbung 7 befindet und den Verschluss 1' zu öffnen droht.

Figur 4 lässt eine Betätigungseinrichtung 5' erkennen, deren Außenkontur 8 mit leichten Wellen 9 oder Mulden 10 versehen ist, um zumindest einen wenn auch kleinen Reibungskoeffizienten beim Greifen zu gewährleisten.

Die Figur 5 zeigt eine erfindungsgemäße Betätigungseinrichtung 5'' mit einem einen drehbaren topfförmigen Verschlusskopf 11 aufweisenden Verschluss 1". In einem am Körper des Gurtbenutzers nach unten zeigenden Kreisbogenabschnitt 12 sind zwei nebeneinander liegende, in der Draufsicht U-förmige Fingermulden 13, 13' vorgesehen. Die beiden Fingermulden 13, 13' sind durch einen Steg 14 voneinander getrennt. Die in den Umfang 15 des Verschlusskopfs 11 auslaufenden Flanken 16, 16' des Stegs 14 stellen Betätigungsflächen dar, auf die ausreichende Kräfte zur Aktivierung eines auf Verdrehung gerichteten Öffnungsvorgangs aufgebracht werden können.

Durch die bezüglich der Mittellinie 17 versetzte Anordnung der beiden Fingermulden 13, 13' sind deren inneren Scheitelpunkte 18, 18' nahe zur horizontalen Mittelachse 19 der Betätigungseinrichtung 5'' hin verlagert. Dadurch werden lange Flanken 16, 16' am Steg 14 ausgebildet, welche die Krafteinleitung durch nur einen Finger auf jeweils eine der Flanken 16, 16' erlauben.

Schließlich ist noch darauf hinzuweisen, dass der Steg 14 in der Gebrauchslage der Betätigungseinrichtung 5'' nicht über die Oberfläche 20 des Verschlusskopfs 11 nach vorne vorsteht.

### Bezugszeichenaufstellung

- 1 -: Verschluss
1' - Verschluss
1"- Verschluss
- 2 -: Enden v. 3
- 3 -: Bedienungshebel
- 4 -: Gurtzunge
4' - Gurtzunge
- 5 -: Betätigungseinrichtung
5' - Betätigungseinrichtung
5''- Betätigungseinrichtung
- 6 -: Checklistenhalter
- 7 -: Einkerbung an 5
- 8 -: Außenkontur v. 5'
- 9 -: Wellen an 8
- 10 -: Mulden an 8
- 11 -: Verschlusskopf v. 1"
- 12 -: Kreisbogenabschnitt v. 11
- 13 -: Fingermulde
13' - Fingermulde
- 14 -: Steg zw. 13 u. 13'
- 15 -: Umfang v. 11
- 16 -: Flanke v. 14
16' - Flanke v. 14
- 17 -: Mittellinie v. 11
- 18 -: Scheitelpunkt v. 13
18' - Scheitelpunkt v. 13'
- 19 -: horizontale Mittelachse
- 20 -: Oberfläche v. 11

## Patentansprüche

1. Betätigungseinrichtung (5'') für den Verschluss (1'') eines Mehrpunkt-Sicherheitsgurts, insbesondere für einen Sitz in einem Rennwagen oder in einem Flugzeug, welche einen drehbaren topfförmigen Verschlusskopf (11) mit zwei am Umfang (15) des Verschlusskopfs (11) nebeneinander liegenden und durch einen radial gerichteten Steg (14) voneinander getrennten, in der Draufsicht U-förmig gestalteten Fingermulden (13, 13') aufweist, die in einem in der Gebrauchslage des Verschlusskopfs (11) nach unten gerichteten Kreisbogenabschnitt (12) vorgesehen sind, wobei die inneren Scheitelpunkte (18, 18') der Fingermulden (13, 13') nahe an die horizontale Mittelachse (19) hin verlagert sind und die zum Umfang (15) hin auslaufenden Flanken (16, 16') des über die Oberfläche (20) des Verschlusskopfs (11) nicht hinaus ragenden Stegs (14) als Betätigungsflächen ausgebildet sind.

## Claims

1. An actuating device (5'') for the lock (1'') of a multi-point safety belt, more particularly for a seat in a racing car or in an aircraft, comprising a rotatable pot-shaped lock head (11) having two finger recesses (13, 13') of U-shape in plan view, which are situated side by side at the periphery (15) of the lock head (11) and which are separated by a radially directed web (14) and which are provided in an arcuate section (12) of a circle which is directed downwards when the lock head (11) is in the position of use, the inner vertices (18, 18') of the finger recesses (13, 13') being shifted to close to the horizontal centreline (19) and the flanks (16, 16') of the web (14) not projecting beyond the surface (20) of the lock head (11), such flanks running out towards the periphery (15), are constructed as actuating surfaces.

## Revendications

1. Dispositif d'actionnement (5") pour le verrouillage (1") d'une ceinture de sécurité multipoint, ceinture destinée en particulier à un siège de voiture de course ou d'un avion et qui présente une tête de verrouillage rotative en forme de pot (11) avec deux cavités pour doigts en forme de U (13, 13') en vue de dessus, situées côte à côte sur la périphérie (15) de la tête de verrouillage (11) et séparées entre elles par une entretoise (14) dirigée radialement, cavités pour doigts qui sont prévues dans une section d'arc de cercle (12) dirigé vers le bas dans la position d'utilisation de la tête de verrouillage (11), les sommets internes (18, 18') des cavités pour doigts (13, 13') étant décalés à proximité de l'axe médian horizontal (19) et les flancs (16, 16') s'étendant jusqu'à la périphérie (15) de l'entretoise (14) ne faisant pas saillie au-dessus de la surface (20) de la tête de verrou (11) sont conçus comme faces d'actionnement.
